# FASCICULE DE BREVET EUROPEEN

(11) **EP 4 352 492 B1**
(45) Date de publication et mention de la délivrance du brevet: **01.01.2025**
(21) Numéro de dépôt: 22731692.4
(22) Date de dépôt: 06.06.2022
(51) Int. Cl.: G01N 21/45, G01N 21/77, G01N 21/25

(54) **SYSTEME INTERFEROMETRIQUE DE DETECTION D'ANALYTES COMPORTANT UNE MATRICE D'INTERFEROMETRES DE MACH-ZEHNDER**
INTERFEROMETRISCHES ANALYTNACHWEISSYSTEM MIT MACH-ZEHNDER-INTERFEROMETERARRAY
INTERFEROMETRIC ANALYTE DETECTION SYSTEM COMPRISING A MACH-ZEHNDER INTERFEROMETER ARRAY

(30) Priorité: 10.06.2021 FR 2106153; 28.07.2021 FR 2108208
(43) Date de publication de la demande: 17.04.2024
(73) Titulaire: Commissariat à l'Energie Atomique et aux Energies Alternatives, 75015 Paris (FR); Aryballe, 38000 Grenoble (FR)
(72) Inventeur: LAPLATINE, Loic, 38054 Grenoble cedex 9 (FR); HERRIER, Cyril, 38000 GRENOBLE (FR); LIVACHE, Thierry, 38000 GRENOBLE (FR)
(74) Mandataire: Brevalex
(86) Numéro de dépôt international: PCT/EP2022/065307
(87) Numéro de publication internationale: WO 2022/258559

(56) Documents cités:
- EP-A1- 3 754 326
- DENSMORE A ET AL: "Silicon photonic wire biosensor array for multiplexed real-time and label-free molecular detection", OPTICS LETTERS, OPTICAL SOCIETY OF AMERICA, US, vol. 34, no. 23, 1 December 2009 (2009-12-01), pages 3598 - 3600, XP001550339, ISSN: 0146-9592, DOI: 10.1364/OL.34.003598

## Description

### DOMAINE TECHNIQUE

Le domaine de l'invention est celui de la détection et de la caractérisation d'analytes présents dans un échantillon fluide au moyen d'un système interférométrique de détection comportant une matrice d'interféromètres de Mach-Zehnder.

### ÉTAT DE LA TECHNIQUE ANTÉRIEURE

La capacité à détecter et caractériser des analytes contenus dans des échantillons fluides, par exemple des molécules odorantes ou des composés organiques volatils, est une problématique de plus en plus importante, notamment dans les domaines de la santé, de l'industrie agroalimentaire, de l'industrie de la parfumerie (senteurs), du confort olfactif dans les endroits confinés publics ou privés (automobile, hôtellerie, lieux partagés...), etc... La détection et la caractérisation de tels analytes présents dans un échantillon fluide peuvent être effectuées par un système interférométrique de détection et de caractérisation. Cet échantillon peut être gazeux ou liquide.

Différentes approches de caractérisation existent, qui se distinguent entre elles notamment par la nécessité ou non d'avoir à « marquer » au préalable les analytes ou les récepteurs par un agent de révélation. A la différence par exemple de la détection par fluorescence qui nécessite d'avoir recours à de tels marqueurs, la détection utilisant la résonance plasmonique de surface (SPR pour *Surface Plasmon Resonance,* en anglais), et celle utilisant une technologie interférométrique de type Mach-Zehnder (MZI, pour *Mach-Zehnder Interferometer,* en anglais), sont des techniques dites sans marqueur (*label free,* en anglais).

Dans la mesure où on ne connaît pas *a priori* l'affinité chimique ou physique d'interaction des analytes avec les récepteurs, la caractérisation des analytes revient alors à déterminer une valeur ou une variation d'un paramètre représentatif des interactions d'adsorption/désorption des analytes avec les récepteurs, ici représentatif de la variation temporelle de l'indice de réfraction local pour chacune des surfaces sensibles. On obtient ainsi un motif d'interaction, ou une signature, qui caractérise les analytes. En effet, les interactions d'adsorption/désorption des analytes sur des surfaces sensibles (surfaces fonctionnalisées) bénéficiant de caractéristiques d'adsorption différenciées permettent de rendre compte des molécules présentes dans le gaz qui ont interagi avec les récepteurs des différentes surfaces sensibles.

Ainsi, dans un système de détection à technologie SPR ou MZI, les analytes présents dans un échantillon fluide viennent interagir par adsorption/désorption avec des récepteurs situés dans une ou plusieurs surfaces sensibles distinctes situées par exemple dans une chambre de mesure. Il s'agit alors de détecter en temps réel un signal optique, associé à chacune des surfaces sensibles, représentatif de la variation temporelle d'un indice de réfraction local du fait des interactions d'adsorption/désorption des analytes avec les récepteurs.

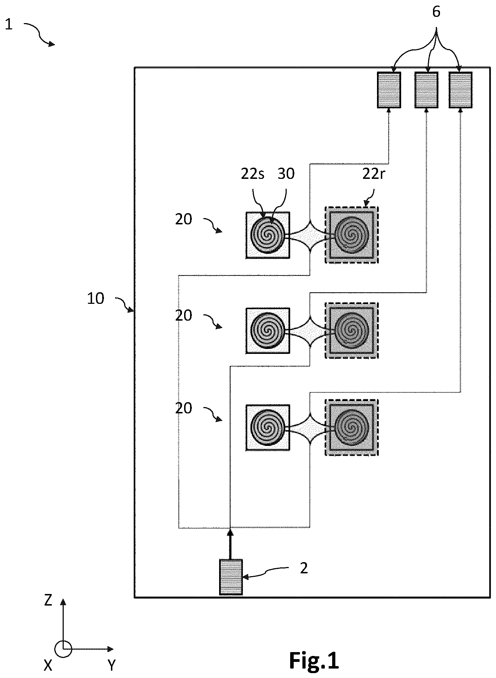

La figure 1 illustre un système interférométrique 1 de détection de technologie MZI selon un exemple de l'art antérieur, ici tel que décrit dans le document EP3754326A1. Le système interférométrique 1 de détection comporte une source laser 2, un diviseur optique, une matrice d'interféromètres de Mach-Zehnder 20, et des photodétecteurs 6 couplés chacun à un interféromètre 20. Dans cet exemple, la source laser 2, la matrice d'interféromètres 20 et les photodétecteurs 6 reposent sur une puce photonique 10.

Chaque interféromètre 20 comporte deux guides d'onde 22 en spirale, symétriques l'un de l'autre suivant un axe longitudinal Z. L'un des guides d'onde est recouvert par des récepteurs avec lesquels les analytes sont aptes à interagir par adsorption/désorption. Ces récepteurs forment une surface sensible 30, et le guide d'onde en question est alors appelé bras sensible 22s. L'autre guide d'onde n'est pas recouvert par les récepteurs, et forme alors le bras de référence 22r.

La présence d'analytes adsorbés sur la surface sensible 30 du bras sensible 22s modifie les propriétés du mode optique guidé le parcourant, et entraîne plus précisément une modification de la phase du mode optique guidé, alors que la phase du mode guidé parcourant le bras de référence 22r n'est sensiblement pas modifiée. La différence de phase entre les signaux reçus par le coupleur de sortie se traduit par une modification de l'intensité du signal optique recombiné et détecté par le photodétecteur 6, du fait d'interférences constructives ou destructives entre les signaux optiques circulant dans les deux bras 22.

Il importe de réduire l'encombrement de la matrice d'interféromètres de Mach-Zehnder, ceci pour réduire la surface totale de la puce photonique et donc réduire les coûts.

Une possibilité est alors d'agencer les interféromètres de Mach-Zehnder en matrice présentant plusieurs lignes et colonnes, comme décrit dans l'article de Densmore et al. intitulé Silicon photonic wire biosensor array for multiplexed real-time and label-free molecular détection, Opt. Lett. Vol. 34, No. 23, 3598 (2009). Dans cet exemple, les interféromètres présentent un agencement périodique rectangulaire, et sont alignés en colonnes suivant un axe longitudinal passant entre les guides d'onde de chaque interféromètre de Mach-Zehnder, et en lignes suivant un axe transversal orthogonal à l'axe longitudinal.

Cependant, il existe un besoin de réduire l'encombrement de la matrice d'interféromètres de Mach-Zehnder, sans toutefois dégrader les performances du système interférométrique de détection.

### EXPOSÉ DE L'INVENTION

L'invention a pour objectif de remédier au moins en partie aux inconvénients de l'art antérieur, et plus particulièrement de proposer un système interférométrique de détection comportant une matrice d'interféromètres de Mach-Zehnder dont l'encombrement est réduit et dont les performances du système interférométrique sont préservées, en particulier lorsque les surfaces sensibles comportent des récepteurs différents d'une surface sensible à l'autre.

Pour cela, l'objet de l'invention est un système interférométrique de détection d'analytes présents dans un échantillon fluide, comportant :
- une matrice d'interféromètres de Mach-Zehnder, destinée à être couplée d'une part à au moins une source laser et d'autre part à une pluralité de photodétecteurs, chaque interféromètre comportant deux guides d'onde formant les bras de l'interféromètre, les bras s'étendant en spirale et/ou en serpentin avec un rapport d'aspect égal à 1 (un), les interféromètres étant agencés de manière périodique et rectangulaire, et alignés en colonnes suivant un axe longitudinal passant entre les bras de chaque interféromètre, et en lignes suivant un axe transversal orthogonal à l'axe longitudinal ; et
- une matrice de surfaces sensibles formées chacune de récepteurs avec lesquels les analytes sont aptes à interagir par adsorption/désorption, chaque surface sensible recouvrant au moins en partie l'un des bras d'un interféromètre qui forme alors un bras sensible et ne recouvrant pas l'autre bras qui forme alors un bras de référence.

Selon l'invention, les surfaces sensibles sont agencées de manière périodique et hexagonale, de sorte que les surfaces sensibles d'une même ligne sont positionnées chacune du même côté de l'axe longitudinal passant entre les deux bras de l'interféromètre considéré, le côté de positionnement des surfaces sensibles vis-à-vis des interféromètres d'une même colonne alternant alors d'une ligne à l'autre.

Certains aspects préférés mais non limitatifs de ce système interférométrique de détection sont les suivants.

Les surfaces sensibles d'un même hexagone peuvent comporter trois surfaces sensibles alignées suivant l'axe transversal.

Des surfaces sensibles peuvent comporter des récepteurs différents en termes d'affinité chimique et/ou physique de ceux des surfaces sensibles adjacentes.

Le système interférométrique peut comporter des guides d'onde d'entrée destinés à coupler la source laser à chaque interféromètre, et des guides d'onde de sortie destinés à coupler chaque interféromètre aux photodétecteurs, les guides d'onde d'entrée et de sortie s'étendant suivant l'axe transversal entre chaque ligne d'interféromètres.

Les bras d'une même ligne peuvent être espacés de ceux de la ou des lignes voisines d'un espacement longitudinal eₗ constant d'une ligne à l'autre, et les bras d'une même colonne peuvent être espacés de ceux de la ou des colonnes voisines d'un espacement transversal eₜ constant d'une colonne à l'autre.

Les bras peuvent être réalisés à base de silicium, et sont entourés par une gaine de bas indice de réfraction (par rapport à l'indice de réfraction des bras) réalisée en un oxyde.

Une gaine des bras peut être formée par une couche inférieure et par une couche supérieure, la couche supérieure présentant une échancrure au niveau de chaque bras sensible.

Les bras peuvent être réalisés en un nitrure de silicium, et être recouverts d'une couche mince d'accroche réalisée en un oxyde sur laquelle sont fixés les récepteurs, la couche mince d'accroche étant située dans l'échancrure. La couche mince d'accroche est de préférence une couche déposée et non pas un oxyde natif.

Sur la couche mince d'accroche peuvent être greffés des organosilanes qui forment alors des groupements réactifs auxquels sont liés les récepteurs.

L'invention porte également sur un procédé de fabrication d'un système interférométrique selon l'une quelconque des caractéristiques précédentes, comportant une étape de dépôt des microgouttes contenant des récepteurs, en regard des bras destinés à former les bras sensibles, les microgouttes déposées présentant une dimension d_{g} dans un plan parallèle à la matrice d'interféromètres, et le dépôt des microgouttes présentant une incertitude de positionnement non nulle Δp_{g}, les bras destinés à devenir des bras sensibles étant alors espacés deux à deux d'une distance au moins égale à d_{g}+2×Δp_{g}.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue de dessus, schématique et partielle, d'un système interférométrique de détection selon un exemple de l'art antérieur ;
la figure 2 est une vue de dessus, schématique et partielle, d'un exemple de système interférométrique de détection ;
la figure 3A est une vue de dessus de la matrice d'interféromètres de Mach-Zehnder du système interférométrique de la fig.2 ;
la figure 3B illustre plus en détail une partie de la matrice de la fig.3A, et plus précisément :
   - en vue de dessus, les guides d'onde d'un interféromètre de Mach-Zehnder et une microgoutte contenant des récepteurs destinés à former la surface sensible, et
   - en vue en coupe transversale, la puce photonique avec les guides d'onde de l'interféromètre de Mach-Zehnder et la microgoutte ;
la figure 4A est une vue de dessus d'une autre matrice d'interféromètres de Mach-Zehnder, dans laquelle ces derniers présentent un agencement périodique hexagonal orienté suivant l'axe longitudinal Z ;
la figure 4B est une vue de dessus d'une autre matrice d'interféromètres de Mach-Zehnder, dans laquelle ces derniers présentent un agencement périodique hexagonal orienté suivant l'axe transversal Y ;
la figure 5 est une vue de dessus, schématique et partielle, d'un système interférométrique de détection selon un mode de réalisation ;
la figure 6 est une vue de dessus, schématique et partielle, d'un système interférométrique de détection selon une variante de réalisation.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte d'une manière générale sur la détection et la caractérisation d'analytes présents dans un échantillon fluide (gazeux ou liquide) à analyser. La détection est effectuée au moyen d'un système interférométrique de détection qui comporte d'une manière générale : une source laser, une puce photonique contenant une matrice d'interféromètres de Mach-Zehnder et des surfaces sensibles contenant des récepteurs, et une pluralité de photodétecteurs. Pour caractériser les analytes détectés, il comporte en outre une unité de traitement.

Le système interférométrique de détection utilise la technologie interférométrique de type Mach-Zehnder (MZI, pour *Mach-Zehnder Interferometer,* en anglais). Seul l'un des deux guides d'onde qui forment les bras de l'interféromètre de Mach-Zehnder est recouvert par une surface sensible contenant des récepteurs avec lesquels les analytes sont aptes à interagir par adsorption et désorption. Ce guide d'onde forme alors le bras sensible alors que l'autre guide d'onde forme le bras de référence. Ce dernier est optiquement isolé du milieu extérieur et donc de l'échantillon fluide contenant les analytes. Comme mentionné précédemment, l'intensité du signal optique détecté par le photodétecteur dépend de la valeur de l'indice effectif du mode optique circulant dans le bras sensible, lequel est représentatif des interactions entre les analytes et les récepteurs.

Les analytes sont des éléments présents dans un échantillon fluide et destinés à être détectés et caractérisés par le système interférométrique de détection. Ils peuvent être, à titre illustratif, des bactéries, virus, protéines, lipides, molécules organiques volatiles, composés inorganiques, entre autres. Par ailleurs, les récepteurs (*ligands*, en anglais) sont des éléments qui recouvrent l'un des guides d'onde de l'interféromètre de Mach-Zehnder (bras sensible) et présentent une capacité d'interaction avec les analytes, bien que les affinités chimiques et/ou physiques entre les analytes et les récepteurs ne soient pas nécessairement connues. Les récepteurs des différentes surfaces sensibles présentent de préférence des propriétés physico-chimiques différentes, qui impactent leur capacité à interagir avec les analytes. Il peut s'agir, à titre d'exemples, des acides aminés, des peptides, des nucléotides, des polypeptides, des protéines, des polymères organiques, entre autres.

D'une manière générale, par caractérisation on entend l'obtention d'informations représentatives des interactions des analytes contenus dans l'échantillon fluide avec les récepteurs de la ou des surfaces sensibles du système interférométrique de détection. Les interactions en question ici sont des évènements d'adsorption et/ou de désorption des analytes avec les récepteurs. Ces informations forment ainsi un motif d'interaction, autrement dit une « signature » des analytes, ce motif pouvant être représenté par exemple sous forme d'histogramme ou d'un diagramme en radar. Plus précisément, dans le cas où le système interférométrique de détection comporte K surfaces sensibles distinctes, le motif d'interaction est formé par les K informations représentatives scalaires ou vectorielles, celles-ci étant issues du signal de mesure associé à la surface sensible considérée.

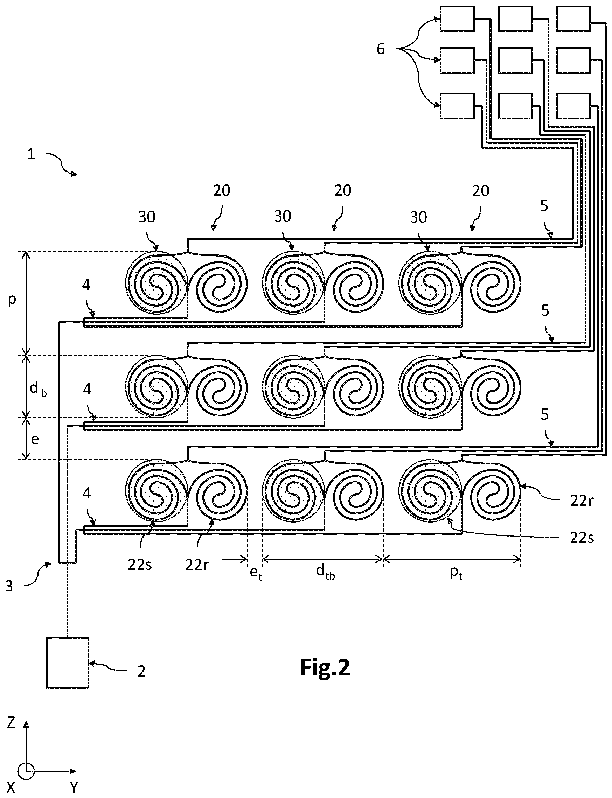

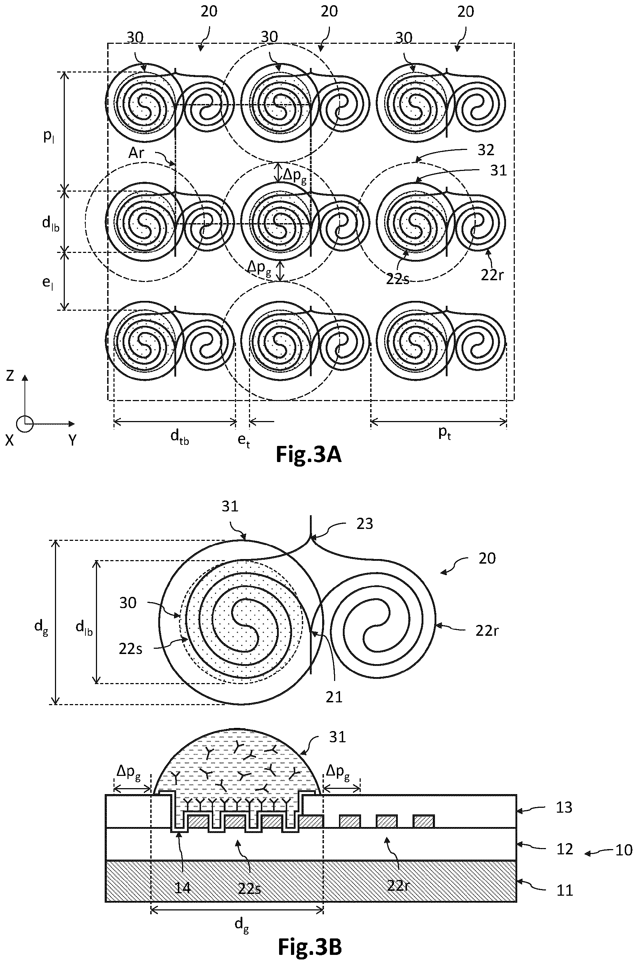

La figure 2 est une vue de dessus, schématique et partielle, d'un exemple de système interférométrique 1 de détection. D'une manière générale, un système interférométrique 1 de détection comporte : au moins une source laser 2 ; une puce photonique 10 (cf. fig.3B) comportant une matrice d'interféromètres 20 de Mach-Zehnder ; et une pluralité de photodétecteurs 6.

La source laser 2 et les photodétecteurs 6 peuvent être situés sur ou dans la puce photonique 10, comme illustré sur la fig.2, ou peuvent être déportés et couplés à celle-ci par des coupleurs optiques (réseaux de diffraction...).

On définit ici et pour la suite de la description un repère direct tridimensionnel orthogonal XYZ, où le plan YZ est parallèle au plan principal de la puce photonique 10, l'axe X est un axe vertical, et où, pour chaque interféromètre 20, l'axe longitudinal Z passe entre les deux bras 22, et l'axe transversal Y est parallèle à un axe passant par le centre des bras 22. Les termes « amont » et « aval » font référence à un positionnement croissant suivant le sens de propagation du signal optique.

La source laser 2 est une source optique de lumière cohérente d'un signal continu et monochromatique, de longueur d'onde prédéfinie par exemple située dans le proche infrarouge. Elle peut être une source laser à cavité verticale émettant par la surface (VCSEL pour *Vertical Cavity Surface Emitting Laser* en anglais), une source laser hybride de type III-V/Si, ou tout autre type de source laser. Comme indiqué précédemment, elle peut être assemblée à la puce photonique ou intégrée à celle-ci, ou peut être déportée.

La puce photonique 10 est un composant optoélectronique contenant un circuit photonique intégré, et plus précisément contenant ici une matrice d'interféromètres 20 de Mach-Zehnder.

Comme l'illustre la fig.3B décrite en détail plus loin, elle comporte une couche support 11, par exemple en silicium ou en verre, sur laquelle repose les guides d'onde 22 des interféromètres 20. Les guides d'onde 22 sont formés d'un coeur de haut indice de réfraction entouré d'une gaine de bas indice. Dans cet exemple, le coeur est réalisé à base de silicium (par exemple en silicium ou en un nitrure de silicium) et la gaine est ici formée d'une couche inférieure 12 et d'une couche supérieure 13 réalisée en un oxyde de silicium.

La matrice d'interféromètres 20 de Mach-Zehnder comporte un diviseur optique 3 couplé à la source laser 2, qui divise le signal optique émis par la source laser 2 et l'oriente vers les N×M interféromètres 20 par des guides d'onde d'entrée 4. A ce titre, la matrice d'interféromètres 20 comporte N lignes et M colonnes, avec N>1 et M>1. Dans cet exemple, la matrice est de dimensions 3×3 à titre purement illustratif, mais elle peut comporter un plus grand nombre d'interféromètres 20, par exemple 8×8 voire davantage.

Ces interféromètres 20 de Mach-Zehnder sont ensuite couplés chacun à un guide d'onde de sortie 5 qui transmet le signal optique en direction de l'un des N×M photodétecteurs 6. Comme indiqué précédemment, les photodétecteurs 6 peuvent reposer sur la puce photonique 10 ou peuvent être déportés. En variante, chaque interféromètre 20 peut être couplé à K guides d'onde de sortie 5, de sorte que le signal optique est transmis à au moins l'un des N×M×K photodétecteurs.

Chaque interféromètre 20 est de type de Mach-Zehnder et comporte donc deux guides d'onde 22 qui forment les bras de l'interféromètre 20. Comme l'illustre plus clairement la figure 3B, un interféromètre 20 de Mach-Zehnder comporte un diviseur d'entrée 21, deux bras 22 distincts couplés au diviseur d'entrée 21, et un coupleur de sortie 23 combinant les signaux optiques circulant dans les deux bras 22. Le signal optique recombiné circule ensuite dans le guide d'onde de sortie 5 jusqu'au photodétecteur 6 correspondant.

Les bras 22 des interféromètres 20 de Mach-Zehnder sont ici des bras qui s'étendent en spirale et/ou en serpentin avec un rapport d'aspect égal à 1 à 20% près, et de préférence à 10% près, et de préférence encore à 1% près. Un guide d'onde est dit en spirale lorsqu'il s'enroule sur lui-même entre le diviseur d'entrée 21 et le coupleur de sortie 23 : il comporte donc une première portion qui se rapproche d'un point fixe suivie d'une deuxième portion qui s'en éloigne. Par ailleurs, un guide d'onde est dit en serpentin lorsqu'il s'étend dans une direction donnée en présentant des ondulations.

Chaque bras 22 en spirale et/ou en serpentin présente un rapport d'aspect égal à 1 dans le plan XY à 20% près voire moins. Un bras 22 comporte donc une partie amont de raccord avec le diviseur d'entrée 21, une partie centrale en spirale et/ou en serpentin proprement dit, et une partie aval de raccord avec le coupleur de sortie 23. La partie centrale en spirale et/ou en serpentin présente une dimension maximale notée d_{lb,1} (par ex. longueur) suivant un premier axe quelconque du plan XY et une dimension notée d_{lb,2} (par ex. largeur) suivant un deuxième axe du plan XY et orthogonal au premier axe. Les dimensions d_{lb,1} et d_{lb,2} sont égales l'une avec l'autre à 20% près ou moins. Dans cet exemple où les bras 22 présentent une forme de spirale circulaire, les dimensions d_{lb,1}, d_{lb,2} sont notées d_{lb} sur les figures. Par ailleurs, la partie centrale en spirale et/ou serpentin peut présenter une forme générale dans le plan XY sensiblement circulaire ou polygonale.

Comme indiqué plus loin, la matrice d'interféromètres 20 de Mach-Zehnder est agencée en lignes suivant l'axe transversal Y et en colonnes suivant l'axe longitudinal Z. Les bras 22 de chaque interféromètre 20 de Mach-Zehnder sont disposés de part et d'autre de l'axe longitudinal Z qui forme un axe de symétrie.

Les interféromètres 20 de Mach-Zehnder sont agencés de manière périodique rectangulaire dans le sens où quatre interféromètres 20 adjacents les uns aux autres sont disposés aux coins d'un même rectangle (cf le rectangle en traits pointillés noté Ar sur la fig.3A). Les interféromètres 20 de chaque ligne sont alignés suivant l'axe transversal Y et présentent un pas de périodicité pₜ, et ceux de chaque colonne sont alignés suivant l'axe longitudinal Z et présentent un pas pₗ.

Les bras 22 d'un interféromètre 20 sont espacés suivant l'axe transversal Y de ceux d'un interféromètre 20 voisin d'une distance eₜ non nulle, et sont espacés suivant l'axe longitudinal Z de ceux d'un interféromètre 20 voisin d'une distance eₗ non nulle. L'espacement transversal eₜ et/ou l'espacement longitudinal eₗ présentent une valeur suffisante pour permettre le passage des guides d'onde d'entrée 4 (reliant le diviseur optique 3 à un interféromètre 20) et le passage des guides d'onde de sortie 5 (reliant l'interféromètre 20 au photodétecteur 6).

A titre d'exemple, pour un interféromètre 20 de Mach-Zehnder présentant une dimension longitudinale d_{lb} égale à 150µm environ et une dimension transversale d_{tb} égale à 300µm environ, l'espacement transversal eₜ peut être égal à 30µm environ et l'espacement longitudinal eₗ peut être égal à 140µm environ. Aussi, le pas transversal pₜ est égal à 330µm environ et le pas longitudinal pₗ est égal à 290µm environ. La matrice présente alors une surface totale égale à N×pₗ×M×pₜ. Dans cet exemple où la matrice est de dimension 3×3, la surface totale est de 0.8613mm².

Le système interférométrique 1 de détection comporte également une matrice de surfaces sensibles 30. Une surface sensible 30 est une surface de la puce photonique 10 qui s'étend dans le plan XY et qui est formée de récepteurs avec lesquels les analytes sont aptes à interagir par adsorption/désorption.

Chaque surface sensible 30 est située de manière à recouvrir au moins en partie l'un des bras 22 d'un interféromètre 20 de Mach-Zehnder qui forme alors le bras sensible 22s, le deuxième bras 22 n'étant pas recouvert par ces récepteurs et forme alors le bras de référence 22r. Le bras de référence 22r est isolé optiquement de l'environnement et donc de l'échantillon fluide contenant les analytes.

Les surfaces sensibles 30 sont spatialement distinctes les unes des autres. Elles comportent des récepteurs qui peuvent être différents d'une surface sensible 30 à l'autre en termes d'affinité chimique ou physique vis-à-vis des analytes à caractériser, et sont donc destinés à fournir une information d'interaction différente d'une surface sensible 30 à l'autre. Le système interférométrique 1 de détection peut toutefois comporter plusieurs surfaces sensibles 30 identiques, dans le but par exemple de détecter une éventuelle dérive de mesure et/ou de permettre l'identification d'une surface sensible 30 défectueuse.

Dans cet exemple, les surfaces sensibles 30 présentent une forme circulaire (les bras 22 sont ici en forme de spirale circulaire), et présentent une dimension longitudinale ici sensiblement égale à celle des bras en spirale 22. Aussi, la dimension longitudinale d_{lb} est ici celle des bras en spirale 22 comme celle des surfaces sensibles 30.

Par ailleurs, les surfaces sensibles 30 sont agencées de manière périodique rectangulaire, comme l'agencement des interféromètres 20 de Mach-Zehnder. Ainsi, les surfaces sensibles 30 présentent également un alignement suivant l'axe transversal Y et présentent un pas de périodicité pₜ, et un alignement suivant l'axe longitudinal Z et présentent un pas pₗ. Autrement dit, les surfaces sensibles 30 sont toutes situées du même côté de l'axe longitudinal Z, et recouvrent ici le guide d'onde de gauche (direction -Y) de chaque interféromètre 20 de Mach-Zehnder.

Le coeur du bras sensible 22s est situé à une profondeur vis-à-vis de la surface sensible 30, et donc des récepteurs, telle que le signal optique s'y propageant présente un indice effectif qui dépend de la quantité de matière déposée dans la surface sensible 30, et donc des interactions entre les analytes et les récepteurs. A ce titre, comme l'illustre la fig.3B, la couche supérieure 13 de la gaine peut être localement gravée pour rendre libre au moins la face supérieure du bras sensible 22s et former ainsi une échancrure, alors qu'elle n'est pas gravée au niveau du bras de référence 22r. Une couche mince d'accroche 14 peut être déposée localement au niveau du bras sensible dans l'échancrure ainsi formée, pour faciliter la fixation (greffage) des récepteurs.

Rappelons que l'indice effectif d'une mode guidé est défini comme le produit de la constante de propagation β et de λ/2π, λ étant la longueur d'onde du signal optique. La constante de propagation β dépend de la longueur d'onde λ et du mode du signal optique, ainsi que des propriétés du guide d'onde (indices de réfraction et géométrie). L'indice effectif du mode optique correspond, d'une certaine manière, à l'indice de réfraction du guide d'onde 'vu' par le mode optique. Il est habituellement compris entre l'indice du coeur et l'indice de la gaine. On comprend donc que la quantité et le type de récepteurs et d'analytes adsorbés dans la surface sensible modifient les propriétés du mode optique et/ou du guide d'onde, et donc la phase du mode guidé.

Il en résulte donc que la présence d'analytes adsorbés sur la surface sensible 30 du bras sensible 22s modifie les propriétés du mode optique guidé le parcourant, et entraîne plus précisément une modification de la phase du mode optique guidé, alors que la phase du mode guidé parcourant le bras de référence 22r n'est sensiblement pas modifiée. La différence de phase entre les signaux reçus par le coupleur de sortie 23 se traduit par une modification de l'intensité du signal optique recombiné et détecté par le photodétecteur 6, du fait d'interférences constructives ou destructives entre les signaux optiques circulant dans les deux bras 22.

Une unité de traitement (non représentée) permet la mise en oeuvre des opérations de traitement d'un procédé de caractérisation des analytes. Autrement dit, à partir des signaux optiques détectés par les photodétecteurs, l'unité de traitement détermine une signature des analytes qui permet de les caractériser. Pour cela, elle est couplée aux photodétecteurs, et peut comporter au moins un microprocesseur et au moins une mémoire. Elle comporte un processeur programmable apte à exécuter des instructions enregistrées sur un support d'enregistrement d'informations. Elle comporte en outre au moins une mémoire contenant les instructions nécessaires à la mise en oeuvre du procédé de caractérisation. La mémoire est également adaptée à stocker les informations calculées à chaque instant de mesure.

La figure 3A est une vue de dessus de la matrice d'interféromètres 20 de Mach-Zehnder illustrée sur la fig.2, et illustre quelques microgouttes 31 déposées sur la puce photonique 10 en vue de réaliser les surfaces sensibles 30. La figure 3B est des vues de dessus et en coupe d'une surface sensible 30, d'une microgoutte 31, et des bras 22 d'un interféromètre 20 de Mach-Zehnder.

Le procédé de fabrication du système interférométrique 1 de détection comporte une étape de réalisation des surfaces sensibles 30. Pour cela, à la suite de la gravure localisée de la couche supérieure 13 au niveau du bras sensible 22s, on dépose des microgouttes 31 dans les zones de la puce photonique 10 destinées à devenir les surfaces sensibles 30.

Les microgouttes 31 sont formées d'un solvant contenant les récepteurs voulus. Elles sont déposées de manière collective ou une par une, au moyen d'un mécanisme de dépôt de microgouttes (non représenté). Lorsqu'elles sont déposées sur la puce photonique 10, elles présentent une dimension dans le plan XY notée d_{g}, qui est supérieure ou égale à la dimension d_{lb} des bras en spirale 22 (et des surfaces sensibles 30 à former).

Dans cet exemple, les guides d'onde sont réalisés à base d'un nitrure de silicium, par exemple en Si₃N₄, et la couche mince d'accroche 14 est réalisée en un oxyde, par exemple en un oxyde de silicium, d'aluminium, d'hafnium, entre autres. Elle présente une épaisseur de l'ordre de quelques nanomètres à quelques dizaines de nanomètres, par exemple égale à 10nm. Notons que cette couche mince d'accroche 14 peut être omise lorsque le matériau des guides d'onde est propice à assurer aux récepteurs une accroche suffisante.

Cette couche mince d'accroche 14 permet ici une silanisation améliorée. Autrement dit, la couche mince d'accroche 14 est modifiée par greffage covalent d'organosilanes qui forment des groupements réactifs immobilisant les récepteurs. Un organosilane est un composé organo fonctionnel de formule général RₙSiX₍₄₋ₙ₎ avec n un entier compris entre 1 et 3 où R est un groupement organique non hydrolysable porteur d'une fonction d'interaction avec les récepteurs et X est un groupement hydrolysable.

Ainsi, la surface de la couche mince d'accroche 14 est fonctionnalisée par le greffage des organosilanes qui assurent l'immobilisation des récepteurs (par exemple des peptides). Cette silanisation est optimisée puisqu'elle se traduit par une densité élevée de sites actifs de liaison avec les récepteurs (formés par les organosilanes), et par une bonne homogénéité de cette densité de sites actifs sur chaque surface sensible 30. Elle permet également d'obtenir une bonne reproductibilité de réalisation des surfaces actives 30 (en termes de densité et d'homogénéité des sites actifs de liaison des récepteurs) lors de la fabrication des systèmes interférométriques.

A titre d'exemple, on peut souhaiter utiliser des récepteurs de petite taille, tels que des peptides dont la taille est de l'ordre de 1nm, notamment pour détecter des petits analytes. On souhaite alors que les récepteurs forment une couche homogène et dense, par exemple de l'ordre de 10⁶ peptides par µm², pour que les analytes se lient de manière spécifique à la surface sensible 30 (via ces peptides) et non pas de manière non spécifique. Or, la silanisation d'une telle couche d'accroche 14 réalisée en un oxyde permet d'obtenir une densité de sites actifs particulièrement élevée, de l'ordre de 1 à 2 par nm², ce qui permet d'immobiliser ensuite les récepteurs avec la densité et l'homogénéité voulues.

Le procédé de fonctionnalisation de la couche mince d'accroche 14 (silanisation) peut s'effectuer par voie gazeuse (mise en contact de la surface de la couche 14 avec le composé organosilane évaporé dans une enceinte sous vide) ; ou par voie liquide (en plongeant les surfaces à fonctionnaliser dans une solution du composé organosilane dilué dans un solvant organique anhydre). Par ailleurs, le 3-glycidoxypropyltrimethoxysilane (GOPS) peut être utilisé pour permettre ensuite une réaction directe avec des groupements amine d'un récepteur (présents originellement sur les protéines); ou comme autre exemple un silane ayant une terminaison alcyne (exemple : O-(propargyl)-N-(triéthoxysilylpropyl)carbamate) , pour le greffage par cycloaddition d'un récepteur modifié azoture (N3) (technique dite « chimie click »).

On maintient ensuite les microgouttes 31 sur la puce photonique 10 pendant une durée suffisante pour que les récepteurs viennent se fixer (greffage) sur le guide d'onde du bras sensible 22s, et ici sur la couche mince d'accroche 14. Pendant cette durée, les microgouttes 31 sont situées dans un environnement dont les conditions (température, taux d'humidité...) limitent ou évitent leur évaporation. Au terme de cette étape de greffage, la surface de la puce photonique 10 est nettoyée puis séchée.

Cependant, il apparaît que le mécanisme de dépôt des microgouttes 31 peut présenter une incertitude de positionnement Δp_{g} non nul dans le plan XY. Ainsi, sur la fig.3A, on représente les microgouttes 31 par un cercle en train plein, et la zone possible de positionnement 32 par un cercle en traits pointillés de dimension d_{g}+2×Δp_{g} (dans la suite de la description, on considère que deux cercles de dimension d_{g}+2×Δp_{g} qui se touchent correspondent à des microgouttes qui ne peuvent toutefois coalescer).

Il importe donc que les microgouttes 31 soient suffisamment espacées les unes des autres pour éviter toute coalescence entre deux microgouttes voisines. En effet, une telle coalescence se traduirait par une réalisation défectueuse des surfaces sensibles 30 concernées, et donc à une dégradation des performances de détection et de caractérisation par le système interférométrique 1 de détection.

Cependant, on souhaite réduire l'encombrement lié à la matrice d'interféromètres 20 de Mach-Zehnder (surface totale utilisée), ceci pour réduire la surface totale de la puce photonique 10 et ainsi réduire les coûts associés.

On comprend alors que pour réduire l'encombrement de la matrice d'interféromètres 20 de Mach-Zehnder, il faut veiller d'une part à ce que les microgouttes 31 ne puissent coalescer, et d'autre part à ce que l'espacement longitudinal eₗ et/ou transversal eₜ entre les bras 22 des interféromètres 20 de Mach-Zehnder soient suffisants pour le passage des guides d'onde d'entrée 4 et de sortie 5.

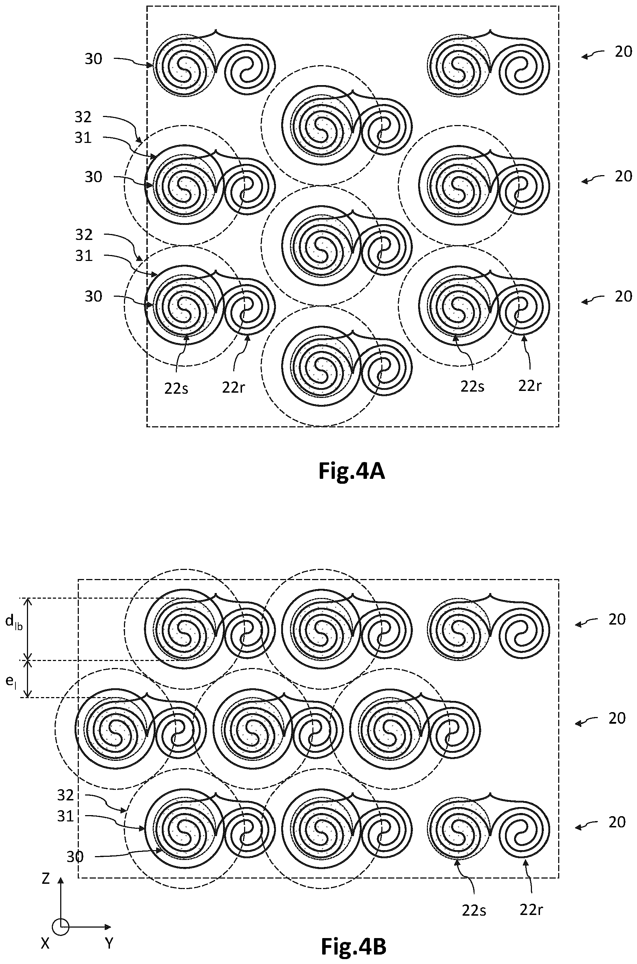

Les figures 4A et 4B sont des vues de dessus de deux exemples de matrices d'interféromètres 20 de Mach-Zehnder, dont l'agencement des interféromètres 20 et des surfaces sensibles 30 est censé réduire l'encombrement de la matrice d'interféromètres 20 tout en veillant à ce que le risque de coalescence des microgouttes 31 soit écarté.

Dans l'exemple de la fig.4A, les interféromètres 20 de Mach-Zehnder et les surfaces sensibles 30 présentent un agencement identique, à savoir ici un agencement périodique hexagonal orienté ici suivant l'axe longitudinal Z.

Autrement dit, sept interféromètres 20 sont disposés aux sommets et au centre d'un hexagone, dont trois interféromètres 20 alignés suivant l'axe longitudinal Z. De plus, les surfaces sensibles 30 sont disposées du même côté de l'axe longitudinal Z, à savoir ici du côté gauche (direction -Y).

Cet agencement ne forme pas un hexagone régulier puisque la longueur des côtés de l'hexagone n'est pas constante d'un côté à l'autre. Ainsi, les interféromètres 20 adjacents d'une même colonne sont espacés d'une distance sensiblement égale à d_{g}+2×Δp_{g}, et ici égale à 290µm, alors que la distance séparant deux interféromètres 20 adjacents de colonnes différentes est supérieure à d_{g}+2×Δp_{g}, et ici égale à 360µm.

Quoi qu'il en soit, il en résulte que cet agencement des interféromètres 20 de Mach-Zehnder et des surfaces sensibles 30 ne conduit pas à une optimisation de l'encombrement de la matrice d'interféromètres 20. En effet, la surface totale (trait rectangulaire en pointillé) de la matrice est supérieure à celle de la fig.2 de plus de 15%, notamment du fait de la présence de zones vides non utiles. De plus, les lignes d'interféromètres 20 ne sont plus espacées les unes des autres par un espacement constant eₗ, de sorte que cet agencement complique grandement la disposition possible des guides d'onde d'entrée 4 et de sortie 5.

Dans l'exemple de la fig.4B, les interféromètres 20 de Mach-Zehnder et les surfaces sensibles 30 présentent également un agencement identique, à savoir ici un agencement périodique hexagonal. Cependant, il est ici orienté suivant l'axe transversal Y (trois interféromètres 20 de l'hexagone sont alignés suivant l'axe Y). Les surfaces sensibles 30 sont disposées du même côté de l'axe longitudinal Z, à savoir ici du côté gauche (direction -Y).

Cet agencement n'est pas non plus un hexagone régulier. En effet, les interféromètres 20 adjacents formant un côté situé sur une même ligne sont espacés l'un de l'autre d'une distance supérieure à d_{g}+2×Δp_{g}, ici égale à 330µm. Et les interféromètres 20 formant un côté qui passe d'une ligne à l'autre sont espacés d'une distance d_{g}+2×Δp_{g} égale ici à 290µm.

Quoi qu'il en soit, il en résulte cependant que cet agencement des interféromètres 20 et des surfaces sensibles 30 ne conduit pas non plus à une réelle optimisation de l'encombrement de la matrice d'interféromètres 20. En effet, la surface totale de la matrice est inférieure de seulement 3% environ à celle de la fig.2, du fait de zones vides non utiles. Par ailleurs, les lignes d'interféromètres 20 sont espacées les unes des autres par un espacement constant eₗ de l'ordre de 90µm (contre 140µm dans la fig.2).

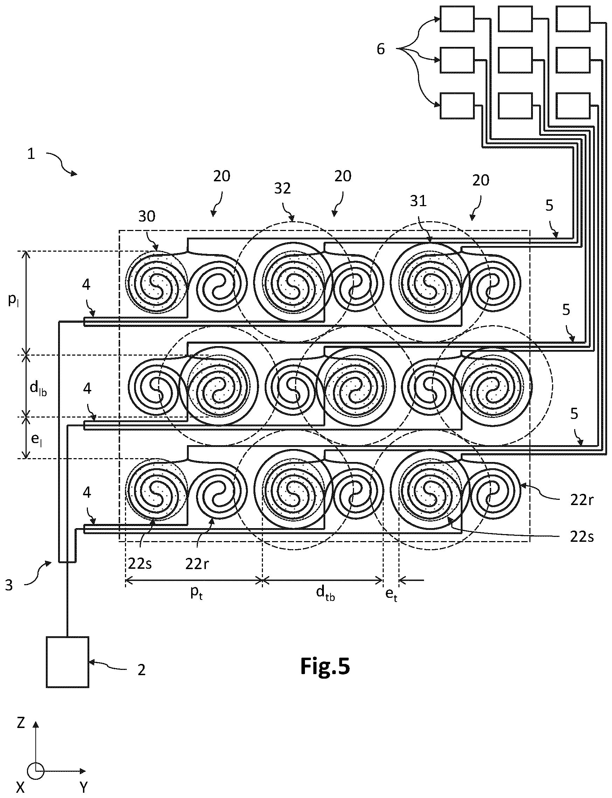

La figure 5 est une vue de dessus, schématique et partielle, d'un système interférométrique 1 de détection selon un mode de réalisation de l'invention.

Il diffère de celui de la fig.2 essentiellement par l'agencement des surfaces sensibles 30. En effet, il apparaît que le fait de dissocier l'agencement périodique des interféromètres 20 de celui des surfaces sensibles 30 permet de réduire l'encombrement de la matrice d'interféromètres de Mach-Zehnder tout en s'assurant que les microgouttes 31 ne puissent coalescer. De plus, l'espacement entre les lignes et/ou les colonnes des interféromètres 20 est suffisant pour permettre le passage des guides d'onde d'entrée 4 et de sortie 5.

Pour cela, les interféromètres 20 de Mach-Zehnder sont agencés de manière périodique rectangulaire. Ils sont alignés en lignes suivant l'axe transversal Y et sont alignés en colonnes suivant l'axe longitudinal Z. Le pas transversal pₜ est constant et est ici égal à 330µm environ. Il est formé de la dimension transversale d_{tb} des bras (ici égale à 300µm environ) et de l'espacement transversal eₜ entre les bras 22 de deux interféromètres 20 adjacents (ici égal à 30µm environ). De plus, le pas longitudinal pₗ est constant et est ici égal à 250µm environ. Il est formé de la dimension longitudinale d_{lb} des bras (ici égal à 150µm environ) et de l'espacement longitudinal eₗ entre les bras 22 de deux interféromètres 20 adjacents (ici égal à 100µm environ).

De plus, les surfaces sensibles 30 sont agencées de manière périodique hexagonale suivant l'axe transversal Y. Elles sont situées sur les six sommets et le centre de l'hexagone. L'hexagone est orienté suivant l'axe transversal Y dans le sens où trois surfaces sensibles 30 de l'hexagone (deux sommets et le centre) sont situées sur une même ligne et sont alignées suivant l'axe transversal Y.

Cet agencement périodique hexagonal se traduit par le fait que les surfaces sensibles d'une même ligne sont positionnées d'un même côté de l'axe longitudinal Z passant entre les deux bras 22 de l'interféromètre 20 considéré, et que ce côté de positionnement change d'une ligne à l'autre. Autrement dit, le côté de positionnement des surfaces sensibles 30 vis-à-vis des interféromètres 20 d'une même colonne alterne d'une ligne à l'autre. Dans cet exemple, les surfaces sensibles 30 de la ligne inférieure sont situées en regard du bras 22 de gauche (situé suivant la direction -Y), les surfaces sensibles 30 de la ligne centrale sont situées en regard du bras 22 de droite (situé suivant la direction +Y), et les surfaces sensibles 30 de la ligne supérieure sont situées en regard du bras 22 de gauche.

Ainsi, il apparaît que le fait d'agencer les interféromètres 20 de manière rectangulaire permet d'éviter les zones non utiles qui se présentent dans les fig.4A et 4B. De plus, l'agencement périodique hexagonal des surfaces sensibles 30 permet de réduire l'encombrement de la matrice d'interféromètres puisqu'il est possible de diminuer les espacements eₗ et/ou eₜ tout en s'assurant que les microgouttes 31 ne puissent coalescer d'une part, et que le passage des guides d'onde d'entrée 4 et de sortie 5 reste possible d'autre part. A titre illustratif, la surface totale de la matrice d'interféromètres de Mach-Zehnder est inférieure de près de 14% à celle de la fig.2.

Des modes de réalisation particuliers viennent d'être décrits. Différentes variantes et modifications apparaîtront à l'homme du métier.

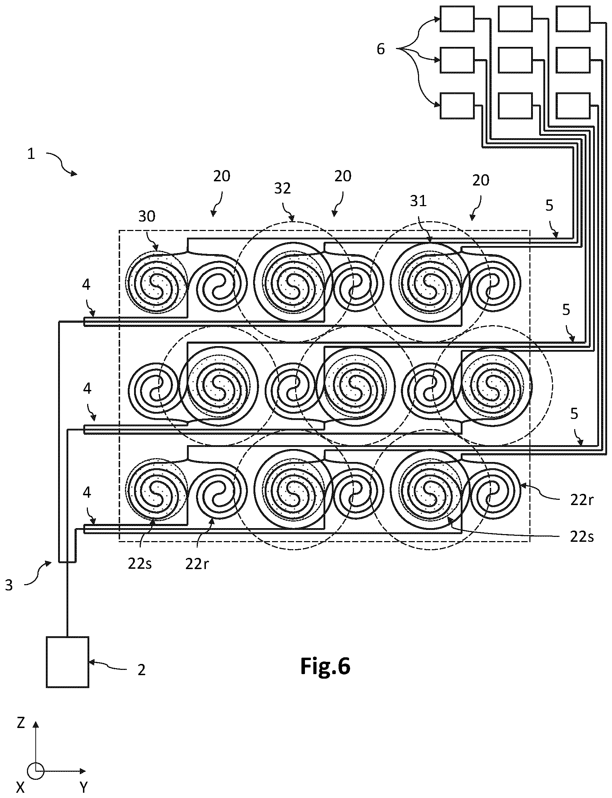

Ainsi, comme l'illustre la figure 6, les interféromètres de Mach-Zehnder 20 peuvent présenter une configuration symétrique d'une ligne à l'autre. Autrement dit, pour une ligne donnée, les interféromètres 20 présentent la configuration de la fig.5, et pour les lignes voisines, le diviseur optique 21 est situé en amont du centre des bras 22 en spirale (suivant la direction -Z) alors que le coupleur optique 23 est situé en aval du centre des bras 22 en spirale (suivant la direction +Z). Quoi qu'il en soit, comme indiqué plus haut, les bras 22 présentent une forme de spirale et/ou de serpentin avec un rapport d'aspect égal à 1 à 20% près.

## Revendications

1. Système interférométrique (1) de détection d'analytes présents dans un échantillon fluide, comportant :
∘ une matrice d'interféromètres (20) de Mach-Zehnder, destinée à être couplée d'une part à au moins une source laser (2) et d'autre part à une pluralité de photodétecteurs (6), chaque interféromètre (20) comportant deux guides d'onde (22) formant les bras de l'interféromètre, les bras (22) s'étendant en spirale et/ou en serpentin avec un rapport d'aspect égal à 1,
• les interféromètres (20) étant agencés de manière périodique et rectangulaire, et alignés en colonnes suivant un axe longitudinal (Z) passant entre les bras (22) de chaque interféromètre (20), et en lignes suivant un axe transversal (Y) orthogonal à l'axe longitudinal (Z) ;
∘ une matrice de surfaces sensibles (30) formées chacune de récepteurs avec lesquels les analytes sont aptes à interagir par adsorption/désorption, chaque surface sensible (30) recouvrant au moins en partie l'un des bras (22) d'un interféromètre (20) qui forme alors un bras sensible (22s) et ne recouvrant pas l'autre bras (22) qui forme alors un bras de référence (22r) ;
∘ **caractérisé en ce que** :
• les surfaces sensibles (30) sont agencées de manière périodique et hexagonale, de sorte que les surfaces sensibles (30) d'une même ligne sont positionnées chacune du même côté de l'axe longitudinal (Z) passant entre les deux bras (22) de l'interféromètre (20) considéré, le côté de positionnement des surfaces sensibles (30) vis-à-vis des interféromètres (20) d'une même colonne alternant alors d'une ligne à l'autre.

2. Système interférométrique (1) selon la revendication 1, dans lequel les surfaces sensibles (30) d'un même hexagone comportent trois surfaces sensibles (30) alignées suivant l'axe transversal (Y).

3. Système interférométrique (1) selon la revendication 1 ou 2, dans lequel des surfaces sensibles (30) comportent des récepteurs différents en termes d'affinité chimique et/ou physique de ceux des surfaces sensibles adjacentes.

4. Système interférométrique (1) selon l'une quelconque des revendications 1 à 3, comportant des guides d'onde d'entrée (4) couplant la source laser (2) à chaque interféromètre (20), et des guides d'onde de sortie (5) couplant chaque interféromètre (20) aux photodétecteurs (6), les guides d'onde d'entrée (5) et de sortie (6) s'étendant suivant l'axe transversal (Y) entre chaque ligne d'interféromètres (20).

5. Système interférométrique (1) selon l'une quelconque des revendications 1 à 4, dans lequel les bras (22) d'une même ligne sont espacés de ceux de la ou des lignes voisines d'un espacement longitudinal eₗ constant d'une ligne à l'autre, et les bras (22) d'une même colonne sont espacés de ceux de la ou des colonnes voisines d'un espacement transversal eₜ constant d'une colonne à l'autre.

6. Système interférométrique (1) selon l'une quelconque des revendications 1 à 5, dans lequel les bras (22) sont réalisés à base de silicium, et sont entourés par une gaine, réalisée en un oxyde, de bas indice de réfraction par rapport à l'indice de réfraction des bras.

7. Système interférométrique (1) selon l'une quelconque des revendications 1 à 6, dans lequel une gaine des bras (22) est formée par une couche inférieure et par une couche supérieure, la couche supérieure présentant une échancrure au niveau de chaque bras sensible (22s).

8. Système interférométrique (1) selon les revendications 6 et 7, dans lequel les bras (22) sont réalisés en un nitrure de silicium, et sont recouverts d'une couche mince d'accroche (14) réalisée en un oxyde sur laquelle sont fixés les récepteurs, la couche mince d'accroche (14) étant située dans l'échancrure.

9. Système interférométrique (1) selon la revendication 8, comportant des organosilanes greffés à la couche mince d'accroche (14) et formant des groupements réactifs auxquels sont liés les récepteurs.

10. Procédé de fabrication d'un système interférométrique (1) selon l'une quelconque des revendications précédentes, comportant une étape de dépôt des microgouttes contenant des récepteurs :
∘ en regard des bras (22) destinés à former les bras sensibles (22s),
∘ les microgouttes déposées présentant une dimension d_{g} dans un plan parallèle à la matrice d'interféromètres (20) ;
∘ le dépôt des microgouttes présentant une incertitude de positionnement non nulle Δp_{g}, les bras (22) destinés à devenir des bras sensibles (22s) étant alors espacés deux à deux d'une distance au moins égale à d_{g}+2×Δp_{g}.

## Patentansprüche

1. Interferometrisches System (1) zum Nachweisen von Analyten, die in einer Flüssigkeitsprobe vorhanden sind, Folgendes umfassend:
∘ ein Anordnung von Mach-Zehnder-Interferometern (20), die dazu bestimmt ist, einerseits an mindestens eine Laserquelle (2) und andererseits an eine Vielzahl von Fotodetektoren (6) gekoppelt zu werden, wobei jedes Interferometer (20) zwei Wellenleiter (22) umfasst, die die Arme des Interferometers bilden, wobei sich die Arme (22) spiralförmig und/oder schlangenförmig mit einem Seitenverhältnis von 1 erstrecken,
• wobei die Interferometer (20) periodisch und rechteckig angeordnet und in Spalten entlang einer Längsachse (Z), die zwischen den Armen (22) jedes Interferometers (20) verläuft, und in Zeilen entlang einer Querachse (Y), die orthogonal zur Längsachse (Z) verläuft, ausgerichtet sind;
∘ eine Anordnung von empfindlichen Oberflächen (30), die jeweils aus Rezeptoren ausgebildet sind, mit denen die Analyten durch Adsorption/Desorption interagieren können, wobei jede empfindliche Oberfläche (30) mindestens teilweise einen der Arme (22) eines Interferometers (20) bedeckt, der dann einen empfindlichen Arm (22s) bildet, und den anderen Arm (22) nicht bedeckt, der dann einen Referenzarm (22r) bildet;
∘ **dadurch gekennzeichnet, dass**:
• die empfindlichen Oberflächen (30) periodisch und sechseckig angeordnet sind, so dass jede der empfindlichen Oberflächen (30) derselben Linie auf derselben Seite der Längsachse (Z) positioniert ist, die zwischen den beiden Armen (22) des betrachteten Interferometers (20) verläuft, wobei die Positionierungsseite der empfindlichen Oberflächen (30) gegenüber den Interferometern (20) derselben Spalte sich dann von einer Zeile zur anderen abwechseln.

2. Interferometrisches System (1) nach Anspruch 1, wobei die empfindlichen Oberflächen (30) desselben Sechsecks drei empfindliche Oberflächen (30) umfassen, die entlang der Querachse (Y) ausgerichtet sind.

3. Interferometrisches System (1) nach Anspruch 1 oder 2, wobei empfindliche Oberflächen (30) unterschiedliche Rezeptoren im Hinblick auf die chemische und/oder physikalische Affinität derjenigen der benachbarten empfindlichen Oberflächen umfassen.

4. Interferometrisches System (1) nach einem der Ansprüche 1 bis 3, das Eingangswellenleiter (4) umfasst, die die Laserquelle (2) mit jedem Interferometer (20) koppeln, und Ausgangswellenleiter (5), die jedes Interferometer (20) mit den Fotodetektoren (6) koppeln, wobei sich die Eingangs- (5) und die Ausgangswellenleiter (6) entlang der Querachse (Y) zwischen jeder Linie der Interferometer (20) erstrecken.

5. Interferometrisches System (1) nach einem der Ansprüche 1 bis 4, wobei die Arme (22) derselben Linie von denen der benachbarten Linie bzw. der benachbarten Linien um einen konstanten Längsabstand ei von einer Linie zur anderen beabstandet sind, und die Arme (22) derselben Spalte von denen der benachbarten Spalte bzw. der benachbarten Spalten um einen konstanten Querabstand eₜ von einer Spalte zur anderen beabstandet sind.

6. Interferometrisches System (1) nach einem der Ansprüche 1 bis 5, wobei die Arme (22) auf Siliziumbasis hergestellt sind und von einer Umhüllung umgeben ist, die aus einem Oxid hergestellt ist und einen niedrigen Brechungsindex im Vergleich zum Brechungsindex der Arme aufweist.

7. Interferometrisches System (1) nach einem der Ansprüche 1 bis 6, wobei eine Umhüllung der Arme (22) durch eine untere Schicht und durch eine obere Schicht ausgebildet ist, wobei die obere Schicht an jedem empfindlichen Arm (22s) eine Aussparung aufweist.

8. Interferometrisches System (1) nach den Ansprüchen 6 und 7, wobei die Arme (22) aus Siliziumnitrid hergestellt sind und mit einer dünnen Haftschicht (14), die aus einem Oxid hergestellt ist, bedeckt sind, auf der die Rezeptoren befestigt sind, wobei sich die dünne Haftschicht (14) in der Aussparung befindet.

9. Interferometrisches System (1) nach Anspruch 8, das Organosilane umfasst, die auf die dünne Haftschicht (14) aufgepfropft sind und reaktive Gruppen bilden, an die die Rezeptoren gebunden sind.

10. Verfahren zum Herstellen eines interferometrischen Systems (1) nach einem der vorhergehenden Ansprüche, das einen Schritt des Abscheidens von Mikrotröpfchen, die die Rezeptoren enthalten:
∘ gegenüber den Armen (22) umfasst, die dazu bestimmt sind, die empfindlichen Arme (22s) zu bilden,
∘ wobei die abgeschiedenen Mikrotröpfchen eine Abmessung d_{g} in einer Ebene parallel zur Anordnung von Interferometern (20) aufweisen;
∘ wobei das Abscheiden der Mikrotröpfchen eine Positionierungsunsicherheit Δp_{g} ungleich Null aufweist, wobei die Arme (22), die dazu bestimmt sind, empfindliche Arme (22s) zu werden, dann paarweise um einen Abstand von mindestens gleich d_{g} + 2 × Δp_{g} voneinander beabstandet sind.

## Claims

1. Interferometric system (1) for detecting analytes present in a fluid sample, including:
∘ a matrix of Mach-Zehnder interferometers (20), intended to be coupled on one side to at least one laser source (2) and on another side to a plurality of photodetectors (6), each interferometer (20) including two waveguides (22) forming the arms of the interferometer, the arms (22) extending in a spiral and/or in a coil with an aspect ratio of 1,
• the interferometers (20) being arranged in a periodic and rectangular manner, and aligned in columns along a longitudinal axis (Z) passing between the arms (22) of each interferometer (20), and in rows along a transverse axis (Y) orthogonal to the longitudinal axis (Z);
∘ a matrix of sensitive surfaces (30) each formed by receptors with which the analytes are able to interact by adsorption/desorption, each sensitive surface (30) at least partly covering one of the arms (22) of an interferometer (20), which then forms a sensitive arm (22s), and not covering the other arm (22), which then forms a reference arm (22r);
∘ **characterised in that**:
• the sensitive surfaces (30) are arranged periodically and hexagonally, so that the sensitive surfaces (30) on one and the same row are each positioned on the same side of the longitudinal axis (Z) passing between the two arms (22) of the interferometer (20) in question, the side where the sensitive surfaces (30) are positioned with respect to the interferometers (20) in one and the same column then alternating from one row to another.

2. Interferometric system (1) according to claim 1, wherein the sensitive surfaces (30) of one and the same hexagon include three sensitive surfaces (30) aligned on the transverse axis (Y).

3. Interferometric system (1) according to claim 1 or 2, wherein the sensitive surfaces (30) include receptors that are different in terms of chemical and/or physical affinity from those of the adjacent sensitive surfaces.

4. Interferometric system (1) according to any one of claims 1 to 3, including entry waveguides (4) coupling the laser source (2) to each interferometer (20), and exit waveguides (5) coupling each interferometer (20) to the photodetectors (6), the entry (5) and exit (6) waveguides extending along the transverse axis (Y) between each row of interferometers (20).

5. Interferometric system (1) according to any one of claims 1 to 4, wherein the arms (22) on one and the same row are spaced apart from those on the adjacent row or rows by a longitudinal spacing eₗ that is constant from one row to another, and the arms (22) on one and the same column are spaced apart from those on the adjacent column or columns by a transverse spacing eₜ that is constant from one column to another.

6. Interferometric system (1) according to any one of claims 1 to 5, wherein the arms (22) are produced from silicon, and are surrounded by a sheath, produced from an oxide, with a low refractive index compared with the refractive index of the arms.

7. Interferometric system (1) according to any one of claims 1 to 6, wherein a sheath of the arms (22) is formed by a bottom layer and by a top layer, the top layer having a cutout at each sensitive arm (22s).

8. Interferometric system (1) according to claims 6 and 7, wherein the arms (22) are produced from a silicon nitride and are covered by a thin bonding layer (14) produced from an oxide on which the receptors are fixed, the thin bonding layer (14) being located in the cutout.

9. Interferometric system (1) according to claim 8, including organosilanes grafted to the thin bonding layer (14) and forming reactive groups to which the receptors are bonded.

10. Method for manufacturing an interferometric system (1) according to any one of the preceding claims, including a step of depositing microdrops containing receptors:
∘ facing the arms (22) intended to form the sensitive arms (22s),
∘ the microdrops deposited having a dimension d_{g} in a plane parallel to the matrix of interferometers (20);
∘ the deposition of the microdrops having a non-zero positioning uncertainty Δp_{g}, the arms (22) intended to become the sensitive arms (22s) then being spaced apart in pairs by a distance of at least d_{g}+2xΔp_{g}.
